# EUROPEAN PATENT SPECIFICATION

(11) **EP 3 316 735 B1**
(45) Date of publication and mention of the grant of the patent: **27.05.2020**
(21) Application number: 16818927.2
(22) Date of filing: 01.07.2016
(51) Int. Cl.: A63F 13/211, A63F 13/245, A63F 13/90, A63F 13/24, A47C 3/18, A47C 3/025, A47C 7/72, A47C 15/00

(54) **MOTION CONTROL SEAT INPUT DEVICE**
EINGABEVORRICHTUNG FÜR BEWEGUNGSSTEUERUNGSITZ
DISPOSITIF D'ENTRÉE POUR SIÈGE À COMMANDE DE MOUVEMENT

(30) Priority: 01.07.2015 US 201514789984; 18.11.2015 US 201562257228 P
(43) Date of publication of application: 09.05.2018
(73) Proprietor: Praevidi, LLC, West Olive, MI 49460 (US)
(72) Inventor: SCHRADIN, Aaron, West Olive, Michigan 49460 (US); SOLOTKO, Simon, Austin, Texas 78740 (US)
(74) Representative: LKGLOBAL Lorenz & Kopf PartG mbB Patentanwälte
(86) International application number: PCT/US2016/040824
(87) International publication number: WO 2017/004580

(56) References cited:
- EP-A1- 2 733 576
- WO-A2-2011/116332
- GB-A- 2 383 783
- JP-A- 2008 026 265
- KR-A- 20050 015 845
- US-A- 3 558 129
- US-A- 5 980 256
- US-A1- 2014 274 564
- US-A1- 2014 309 035
- US-B2- 7 918 742

## Description

### FIELD OF THE INVENTION

The present invention relates to seating devices and methods for providing interactive control of a computing device. More particularly a modular ergonomic seating device for providing input for a computing device.

### BACKGROUND OF THE INVENTION

In order for humans to interact and operate computers, external input devices are generally required. Signals from these external input devices are received by the computer and processed to act as a control signal for controlling an aspect of the computer's function and / or applications (programs) running on the computer.

Traditionally, input devices such as keyboards, mice, game controllers and the like have focused on receiving input movements from the hands and particularly the fingers of users. While these have proven effective, they are poorly suited for more immersive, intuitive control schemes. The development of immersive computer generated environments such as those used for gaming, social interaction, computer-aided design and other similar functions have highlighted the need for new input devices. Of particular note is the rise of augmented reality("AR") and virtual reality ("VR") technology that enables users to be fully immersed in computer generated environments. AR and VR technology platforms are poorly suited for traditional input methods as they can break immersion and detract from the user's experience.

Often input device associated with VR have functions that are inherently unstable. Generally, the further a user moves from a center location, the easier it is to continue moving further because the user's center of gravity goes outside the bounds of the device. To counteract this, devices can be modified with the addition of ballast. This however still never truly corrects the problem as it often increases the resistance force. For example, the further the pivot point for movement is from a user's hips, the further the user's have to move a user's body in order to create the angle the MPU needs and still have a decent sensitivity and proper "dead-zone." Also somewhat susceptible to "signal drift."

WO-2011/116332 discloses a surgical cockpit comprising multisensory and multimodal interfaces for robotic surgery comprising local surgical cockpits comprising local surgical consoles that can communicate with any desired remote surgical module (surgical robot), for example via a shared Transmission Control Protocol/Internet Protocol (TCP/IP) or other unified open source communication protocol or other suitable communication system.

Further, the user's have to move to create the movement, the longer it takes to adjust a user's movement or change movement directions, which makes the user's overshoot a user's preferred movement position. Depending slightly on the radius of the bottom, to go full-speed forward to full-speed backwards means the user's have to move a user's body around 22 inches.

The further the user's movement can put a user off-balance in VR, the more a user's body contemplates going on strike via way of VR induced motion sickness.

Fundamental VR Problems:
- Does not address cable management/tangle
- Does not address uncoupled look/move
- Leaves room for improvement for a more compact operation envelope
- Rubs and walks on flooring due to off axis rotation and no turntable

These approaches were a bit more complex, but much more satisfying. Though the experience was less interesting for a crowd of VR curious onlookers to observe, it was eroding away at the real problems that faced VR. Traditionally, VR systems couple head movement to torso movement. For example, a user in a VR environment can for example travel down a sidewalk and wherever the user's looked, the user travels in the vision direction.

### SUMMARY OF THE INVENTION

As specified in the Background Section above, there is a need for improved devices and methods for providing user input for controlling and or interacting with a computing device.

To overcome the afore mentioned problems, the system according to the present system measures the angle of the user's torso and feeds it back to the application so that the player axis is defined by torso angle. The head mounted display is then constrained to that player but "uncoupled" so that the view from the head mounted display is not affected by the torso angle, but only by the angle interpreted by the head mounted display. The torso angle information is presented as a part of the Human Interface device packet.

According to an alternate teaching, the system can include a rotary slip connector, and a quadrature rotary encoder that keeps track of the orientation of a user's body. Each degree moved is added or subtracted from the original calibration position and can be as accurate as one degree. Optionally, when a user of a system initiates movement, the natural response of the user is to "lean" in the direction they wish to head.

The design of system allows for super-fast directional changes, because a properly trained user of a system does not have to translate their center of gravity to move any direction, they simply use core muscle movement to redistribute their weight to create the movement in VR. Optionally, the system utilizes a solution which the seating surface tilts at a point closer to the hips or seat of the user This pivot location is critical as this approach never puts the user in a position of instability of falling.

According to the present teachings, the system allows a user's lower body function to allow movement in a VR space. The system can incorporate mechanical binary or linear input switches and also an analog representation through a multiple axis processing unit (MPU).

According to the present teachings, the system can provide to those users which are less sensitive to the sensations of VR movement, users can optionally just use a raw analog input gradient to create user movements and use the switches for jump or some other function.

According to the present teachings, the system includes a rotary slip connector design, configured to reliably pass the following signals through the system to ensure that cables, and their signals, are heard loud and clear and never bind, tangle, or twist: HDMI; USB; Power; and 3 Line Developer. The rotary slip connector design "Infinite" rotation with no tangle. According to the present teachings, the system includes a small stool or chair.

The present invention is not to be limited in scope by the specific embodiments described herein. Indeed, various modifications of the invention in addition to those described herein will become apparent to those skilled in the art from the foregoing description. Such modifications are intended to fall within the scope of the appended claims.

All references cited herein, including all patents, published patent applications, and published scientific articles, are incorporated by reference in their entireties for all purposes. Therefore an embodiment of the present invention is an input device comprising a user engaging portion; a plurality of positional sensors, the plurality of positional sensors further comprising; at least one pitch sensor; at least one yaw sensor; at least one roll sensor; and a coupling mechanism capable of coupling the input device to a computing device such that the sensing mechanisms can send data to the computing device. In use, a user will sit on, or straddle the user-engaging portion of the device and lean forwards/backwards, lean side/side, and/or rotate the device. These motions by the user will be detected by the sensors and converted to control signal(s) which are transmitted to a computing device and used to interact with the computing device and/or an application (program) running on the computing device.

An embodiment is a rotating sensor seat for providing freedom of movement useful for users employing motion-based input or head mounted displays. The seat has a base, a rotating platform, cushions, adjustment controls and accessory attachment points. The seat has the advantage that the user is able to place their legs in a straddle position about the seat for rotational control, tilt control and balance. In some embodiments of the seat, integrated sensors detect movement, position, and provide interactive feedback. In some embodiments, attachments and accommodations for external motion trackers and tracking head mounted displays are incorporated to ensure an ergonomic interface between the interface device, the user and the seat. In some embodiments one or more components of the seat is a stackable module permitting user assembly and customization through the use of interchangeable components.

In at least one embodiment the invention includes electronic control interfaces and sensors to measure pressure, position, rotational measurement, and bio-input which enables the control of interactive software when connected by wire or wirelessly to a computing device including a smartphone, tablet, handheld gaming device, or interactive computing device. Interactive sensors measure user movement and position including: tilt for providing both directional and intensity input similar to data provided by a handheld joystick with real-time x and y coordinates; rotational position; user weight and change of pressure against the top of the seat on the vertical axis; user position measured and position changes on multiple axes. In at least one embodiment user weight is used to determine the identity of the user and employed for calibration of seat interactive sensor settings and made available via an application program interface to an interfaced computing device. Biofeedback through interactive sensors is provided through a software interface.

Much like riding a horse, forces of instability caused by gesture and motion interfaces and the instability inherent in wearing a head mounted display are counteracted as the user utilizes their lower body to straddle the seat and maintain balance. A further advantage is that the user is positioned to precisely rotate the seat with their legs in a straddle position, with small pushes of the feet providing rotational force orthogonal to the axis of rotation and closely aligned the rotational freedom of the invention and to adjust their position to control interactive software while maintaining balance. A further advantage is that users are able to control interactive software with fine precision that can be measured with an integrated sensor, with external motion controls and a tracking head mounted display.

In at least one embodiment the cushion in multiple sizes accommodates different user heights and body types.

In at least one embodiment the seat cushion is made from a flexible inflatable material that is filled with air and filler and ballast with the advantage of body contouring support for the lower body and legs of the user maintaining ergonomic body position. Another advantage of flexible inflatable material is deflation for shipment and easy user inflation for installation with the ability to customize air pressure, filler and ballast for user preferences and body types. An additional advantage is when deflated the flexible inflatable material reduces the total volume of the seat for shipment or user storage. In at least one embodiment the flexible inflatable materials is a modular component held in place by a retaining base with the advantage of increasing the stability of the cushion while retaining ergonomic, packaging, and additional advantages of the material.

The flexible inflatable cushion has the advantage of ergonomic seating position similar to an exercise ball with additional stability featuring a cylindrical or pod shape with increased range of user leg and feet motion.

In at least one embodiment the seat is composed of stacking modules with close, contoured interfaces with the advantage of reconfiguration by the end user and simple assembly for interactive control, user adjustment, or feature customization. A further advantage of the stacking modules with close contoured interfaces is few protruding points diminishing the chance of cord tangles from external controllers or head mounted displays. An additional advantage of stacking modules is easy manufacturing, packaging and user assembly of the finished seat.

In at least one embodiment the seat is constructed from interconnected modules with the advantage of ease of assembly and user configuration where modules can include: a base platform adjusting the height and weight of the seat; a rotational platform with variable stops for allowing the user to turn freely or prevent continuous turning; electronic interactive sensors; a retaining base; a cushion; a back support unit; an arm support unit; a cable management unit; a platform or compartment for storage.

In at least one embodiment the seat is constructed from interconnected modules with the advantage of ease of assembly and user configuration where modules can include: a base platform adjusting the height and weight of the seat; a rotational platform with variable stops for allowing the user to turn freely or prevent continuous turning; electronic interactive controls; a cushion interface; a cushion; a back support unit; an arm support unit; a cable management unit; a platform or compartment for storage.

### BRIEF DESCRIPTION OF THE DRAWINGS

Fig. 1 shows a perspective view and a side view in accordance with an embodiment of the disclosure;
Fig. 2 shows an exploded perspective view of seat modules in accordance with an embodiment of the disclosure;
Fig. 3 shows a top view of the rotational platform base and its top shown in accordance with an embodiment of the disclosure;
Fig. 4 shows a seat perspective view and side view in accordance with an embodiment of the disclosure;
Fig. 5 shows a perspective view with a seated user and illustrations of motion on multiple axes in accordance with an embodiment of the disclosure;
Fig. 6 shows a seat perspective view and a side view in accordance with an embodiment of the disclosure;
Fig. 7 shows a side view with a seated user and an illustration of motion on multiple axes in accordance with an embodiment of the disclosure;
Fig. 8 shows side cut away views and perspective detail views in accordance with an embodiment of the disclosure;
Fig. 9 shows side view and side cut away detail views in accordance with an embodiment of the disclosure;
Fig. 10 shows a seat side and perspective view in accordance with an embodiment of the disclosure;
Fig. 11 shows a flow chart of communication of the invention with interactive computing devices in accordance with an embodiment of the disclosure;
Fig. 12 shows a semi exploded view of an embodiment of an input device of the present disclosure;
Fig. 13 shows a semi exploded view of an embodiment of the rotation portion of the input device;
Fig. 14 shows a semi exploded view of aspects of the control switches for the input device on the seat portion; and
Fig. 15 shows a close up look of the gimbal.
Fig. 16, a zero balance seat for elevation control is shown and described where the height of posterior shelf *I* seat is measured
Fig. 17 illustrates mechanisms for addressing and providing for variable movement speed controls;
Fig. 18A is the seating substrate to which is mounted the accelerometer and gyroscope. Fig 18B is the substrate removed to show the switches;
Fig. 19 depicts the variability of the input sensor;
Fig. 20 the switch system mounts switches on a cantilevered elastically deformable member;
Fig. 21a-21c depicts a sensing mechanism mounted on a elastically deformable cantilever support member.

### DETAILED DESCRIPTION OF THE INVENTION

In the following, reference is made to embodiments of the disclosure. The invention is defined by the appended claims.

An embodiment is an input device comprising a user engaging portion; a plurality of positional sensors, the plurality of positional sensors further comprising; at least one pitch sensor; at least one yaw sensor; at least one roll sensor; and a coupling mechanism capable of coupling the input device to a computing device such that the sensing mechanisms can send data to the computing device.

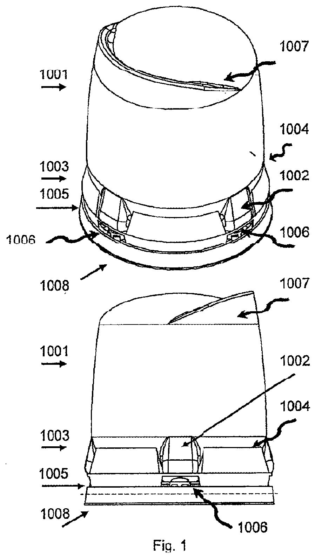

According to the teachings, Fig. 1 shows one embodiment of an input device of the present disclosure taking the form of a rotating sensor seat shown here in perspective and in profile. In this embodiment the seat is composed of stacking modules for reconfiguration by the end user and simple assembly for interactive control, user adjustment, and / or feature customization. A cushion 1001 features a lip 1007 with a taper that allows the legs to straddle the sides of the seat. In some embodiments the cushion is flexible and inflatable thermoplastic polymer further permitting conformity to the seated user as the seat conforms to the inner thighs. In some embodiments, the cushion includes shaped stabilizing feet 1002 that fit into the shaped intersection 1004 of the retaining base 1003 and the cushion 1001. The stabilizing feet have the advantage of providing a rigid joint for the intersection with the retaining base resistant to torsional or lateral forces thereby providing enhanced stability. The cushion can be partially filled with weighted filler material or ballast such as sand to ensure further stability within the retaining base.

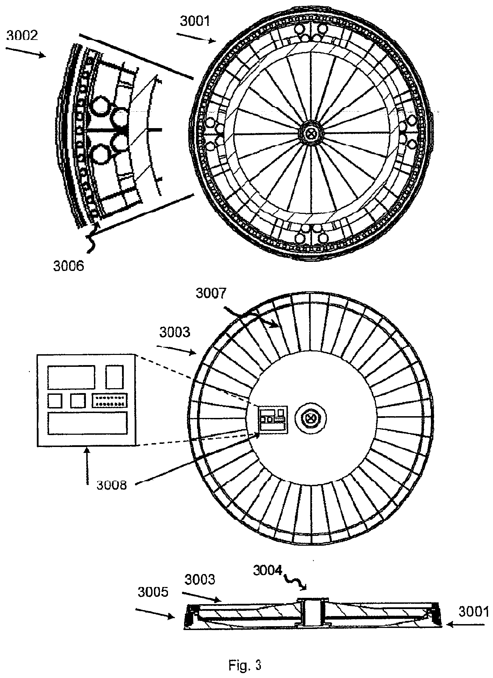

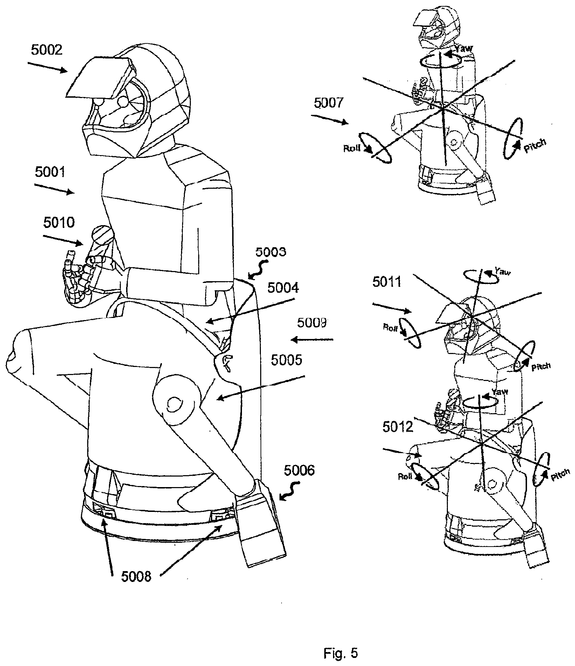

In further detail, still referring to the invention of Fig. 1, the series of close, contoured interfaces between modules provides a smooth surface for the entire profile of the seat with the advantage of minimizing interference with cables, clothing or user feet and legs. This smooth profile rotates at the interface to the rotating platform 1005 with the advantage that the user's leg is able to rest against the cushion 1001 down to the interface of the retaining base and rotating platform 1005 such that the seat rotates with, and in contact with the user's lower body in a straddle position. The combination of rotation of the seat with the user and the cushion is increased stability where the user's feet, legs, and torso partially embrace the rotating seat providing a leverage point for maintaining seating stability. A further advantage of this position is that the user is positioned to precisely rotate the seat with their legs straddling the side of the seat as in Fig. 5 5005, with small pushes of the feet Fig. 5 5006 providing rotational force orthogonal to the axis of rotation and closely aligned the rotational freedom of the rotating base 1008. The rotational base 1008 and cushion platform 1005 in smaller or larger heights or profiles and with a detachable riser platform have the advantage of providing customizable dimensions to different user heights, weights, preferences, and interactive control capabilities. Interactive base sensors 1006 provide sensor feedback to an electronic circuit board Fig. 3 3008 with the advantage of translating user motion into control signals for motion and functional control of software applications running on a computing device. In this embodiment multiple base sensors are arranged in a configuration that permits multiple points of acquiring input for detection of the direction a user is leaning or rotating.

In additional detail, still referring to Fig. 1, interactive sensors 1006 have the advantage of allowing subtle user movements to be translated into motion input, direction of movement, and / or function selection in an interactive software application when employed with a computing device. The interactive sensors 1006 have the advantage of pressure sensitivity such that direction is derived through comparison of all sensors with intensity measured and translated into primitive data and commands for control of a computing device. Pressure on evenly placed sensors has the advantage of interpretation as a desire to move in the direction of the interpreted region, either directly on a sensor on based on weighted average between multiple sensors. Calibration of sensors is accomplished by a user sitting in multiple positions and making core body movements, with measurement spanning all sensors and retained by software and employed for later comparison. Feedback and interaction may also be provided by software input from these devices to interactive sensors such as those in 1006 for feedback including but not limited to sound, vibration, light, light effects, steam or smoke, and other interactive effects.

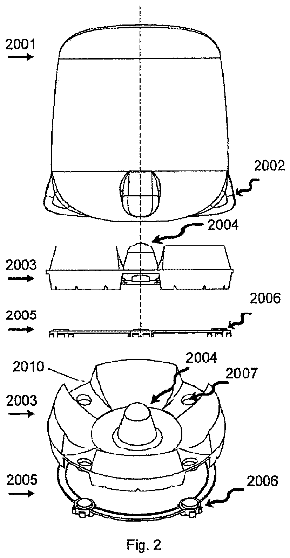

Referring now to Fig. 2, the construction details of the embodiments shown in Fig. 1 to Fig. 5, the cushion 2001 is detachable and usable as a seat in a stand-alone configuration by removal from the retaining base 2003 and placement on a floor or other surface. In some embodiments the retaining base further comprises a plurality of grooves 2010 adapted to engage the stabilizing feet on the cushion. In this use the stabilizing feet 2002 have the advantage of providing additional stability against forces on multiple axes with the advantage of retaining the cushion in an upright position and secured in the retaining base 2003. In at least one embodiment the cushion is inflatable and has the advantage of being partially filled with weighted filler or ballast material such as sand, fluid or gel to ensure further stability when the cushion is used direction on a floor outside of the retaining base. The cushion 2001 comes in multiple sizes to accommodate different user heights and body types and in at least one embodiment is collapsible and may be filled with air and filler. The retaining base 2003 and sensors 2006 in an interconnected sensor module 2005 stack together and may further stack for instance on a rotating base as in Fig. 1 1008. The modular design and construction of the invention has the advantage that it permits users to exchange components rapidly to suit their desired mode of interaction and body position. The pad sensors 2005 collectively electronically sense pressure and motion to provide input to interactive software when connected by wire or wirelessly to a computing device including a smartphone, tablet, PC, gaming console or other computing devices known to those having skill in the art. The modular design has the added advantage that the integrated sensor module 2006 can be exchanged for different modes of control, feedback, or computer and game console compatibility. A further advantage of modular design is cushions 2001 can be made in multiple sizes to accommodate different user heights and body types and used interchangeably by users.

Referring now to Fig. 3, the construction details of the embodiments shown in Fig. 1 to Fig. 5, the rotating platform previously shown in Fig 1. 1008 is now shown from above in two component sections, the rotating platform base 3001 and the rotating platform cover 3003 and in profile cutaway 3005. The rotating platform cover 3003 is connected and secured to the base by means of a kingpin at its center 3004. The rotating cover sits upon a rotating base 3001. A cutaway expansion in 3002 shows an expanded view of a ball bearing track 3006 which allows a rotating base cover to rotate about the axis centered with a kingpin 3004. In at least one embodiment a stop mechanism adjusts and limits rotation of the rotating base by means of an adjustable catch. In at least one embodiment the rotating platform utilizes radial ridges 3007with the advantage of increased rigidity of the rotating platform cover 3003 and rotating platform base 3001. The rotating platform cover utilizes ridges to create an interface with the slots in the retaining base shown in Fig. 2 2003. An electronic circuit board 3008 is mounted to the seat and in at least one embodiment mounted on the rotating platform cover 3003 and interfaces with a wired or wireless interface to interactive sensors Fig. 2 2006 and includes a wire harness, battery, power controller, multi-input processor, positional sensor, magnometer, gyroscope, external power connector and external wired and wireless interface for connection to personal computers, game consoles, mobile devices, handheld gaming devices and other computing devices.

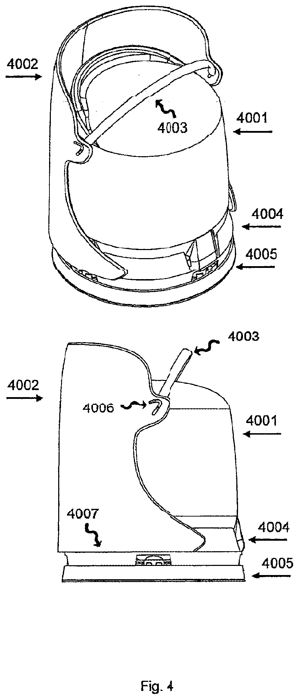

Referring now to Fig. 4, the embodiments in Fig. 1 to Fig. 5, there is shown embodiments of the invention with the addition of a contoured seat back 4002 with the advantage of unobtrusive support for the user's waist and lower back while remaining contoured to avoid cable tangling or interference with foot, leg, and lower body movement. The contoured seat back 4002 rotates with the cushion 4001 and slides on the rotating base 4005 freely along an interface 4007. The back connects as a detachable, or in at least one embodiment integrated, component to the retaining base 4004 and rotating platform cover Fig. 3 3003 with the advantage of allowing the contoured seat back 4002 to rotate with the seat without protrusions or edges that might obstruct movement or catch input device or head mounted display cables. In at least one embodiment the contoured seat back 4002 is modularly connected to the retaining base.

The contoured seat back 4002 has the advantage of providing a stable support and friction surface where it makes contact with the cushion 4001 diminishing loose movement of the cushion 4001 improving cushion stability and rigidity. Mounting 4006 for security bracing 4003 attached to the contoured seat back 4002 has the advantage of providing a support point for security bracing 4003 across the lap of the user with little obstruction to leg movement allowing the user to rotate or shift position for interactive control. In one embodiment the security bracing 4003 is a fabric material and in another embodiment the security bracing is a rigid bar that can be held or secured against the waist. The contoured seat back 4002 has the further advantage of providing enough support for the user to remain secure while being contoured to allow legs and hips to work together to provide motion including rotation, movement for interactive control, and balance while immersed with a head mounted display. The contoured seat back 4002 has the additional advantage of integrating multiple functions without obstructing user movement and while promoting user balance through additional lower back and lower body support.

Referring now to Fig. 5, the embodiments shown in Fig.1 to Fig. 5, there is shown the invention with a user 5001 employing an embodiment of the invention for interactive control while wearing a head mounted display 5002 for interaction with software experiences such as virtual reality, augmented reality, watching interactive video content, design, modeling, 3D computer aided design, or other forms of immersive content interaction. The user 5001 sits on the cushion 5005 with support from the contoured seat back 5003 and in a saddle position with articulated knees 5005 and ankles and feet 5006 with the advantage of a secure and controlled body position while wearing a head mounted display 5002 or utilizing an immersive display. The user 5001 is additionally secured to the invention with a security bracing 5004 with the advantage that if the user were to become unbalanced the security bracing 5004 would provide a physical cue helping the user to rebalance and physical restraint to prevent falling or imbalance.

In further detail, still referring to Fig. 5, the embodiments shown in Fig. 1 to Fig. 5 there is shown the user seated with multiple axes 5007 of movement and motion control. Users may move freely utilizing hands, legs, and head movement through a motion tracking head mounted display 5002 to provide input through one or more motion control devices 5010 while simultaneously providing input by moving in multiple axes 5007 on the present invention detected by interactive sensors 5008 and transmitted to an interactive computing device. Users 5001 may look in one direction providing multiple viewing axes 5011 utilizing a head mounted display 5002 while simultaneously utilizing motion control devices 5010 and simultaneously controlling input along seat multiple seat axes 5012 including yaw, pitch and roll through core body movements of the seat 5009 detected by interactive sensors 5008. In at least one embodiment the direction of the head, arms, and other body parts may also be tracked with motion control devices 5010 not physically connected to the seat and utilizing wired or wireless interfaces and combined electronically with interactive sensors 5008 modularly connected to the seat 5009. The invention has the advantage of allowing the user to utilize short core body movements of the lower body to control motion along multiple axes 5007 moving forward and backward for x axis pitch, left or right for z axis roll, and rotationally for y axis yaw. The invention has the further advantage of detecting and calibrating for weight and sensing up and down user motion through interactive sensors Fig. 1 1006. The invention has the additional advantage of user control of motion input and through small movements while permitting a wide range of gesture based input with hands, rotation, and emulation of walking and movement through core body movements along multiple axes 5007 while having a flexible seating position including a straddle positing conducive to balance control. The invention has another advantage of allowing the user to maintain independent multiple viewing axes 5011 and multiple seat axes 5012 allowing users to provide input to interactive software for viewing direction independent of motion or interactive software function control.

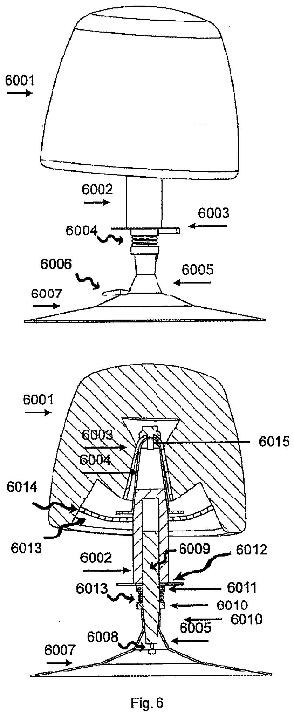

Referring now to Fig. 6, the embodiments shown in Fig. 6 to Fig. 7, there is shown an embodiment of the disclosure with a rotating sensor seat in perspective and in profile. A cushion 6001 is shaped to allow a variety of seating positions including straddle or legs forward with the advantage that a user can freely move between a straddle position for more active motion control and immersion, or moving legs forward for a traditional task-seating legs forward position. The cushion connects to an outer cup 6003 which is coupled to an outer cup 6004 which pivots on an outer cup base providing input to an electronic positional sensor. A shroud 6002 contains a gas cylinder 6009 which is coupled to a spanner spring 6013 compressed between a height adjustment spanner 6011 and a spanner base 6010. A gas cylinder actuator 6008 is controlled by a contoured platform or lever 6006 which is depressed near the base with the advantage of providing hands-free height control. The gas cylinder is coupled to the base at 6005 by pressure fitting securing it to the base assembly 6007. Rotational movement is measured by a rotational sensor reading surface 6012 and an electronic sensor.

In further detail, still referring to Fig. 6 the cushion 6001 extends laterally below the seat sufficient to allow the legs to straddle the cushion. The seat has the advantage of adjustment higher than a traditional task seating seat to allow a free range of motion with the user sitting or sitting with legs extended for more dynamic rotational and pivoting, side to side and front and back movement. The spanner spring 6013 allows positive pressure to be applied allowing the user to maintain contact with the seat while providing motion input through a motion controller or by pivoting and rotating to provide input via the electronic sensors of the invention. The pivoting system of the inner cup 6003 and outer cup 6004 has the advantage of allowing the cushion to pivot with fine precision and user control such that only small movements of the user's lower body are required to tilt the cushion providing motion control input from the electronic tilt sensor.

In additional detail, still referring to Fig. 6, there is shown a centering disc 6014 in the cushion open region 6013 which provides resistance between the cushion 6001 and the shroud 6002 with the advantage of providing a centering force for the cushion 6001 allowing the user to easily return to a centered position. The centering disc 6014 has the further advantage of providing a tactile response and return to neutral position to interactive control provided by the pivoting system of the inner cup 6003 and outer cup 6004 and a positional guide 6015. The centering disc 6014 has the further advantage that it can be offset providing more resistance in one direction more than the other and provide frictional resistance to rotation. In at least one embodiment the centering disc 6014 is composed a polymer as a contiguous piece, segmented, or in additional embodiments composed of a web of woven material with variable degrees of elasticity. In at least one embodiment the centering disk is augmented by a rotating joint that provides adjustable resistance to movement and a natural center point with the advantage that a user can more easily find a forward or home position while rotating in the seat. The centering disk 6014 with multiple material compositions has the advantage of easy tuning to control interfaces integrated in the invention and customization for user preferences and body type. In at least one embodiment the positional guide 6015 is coupled to a positional sensor.

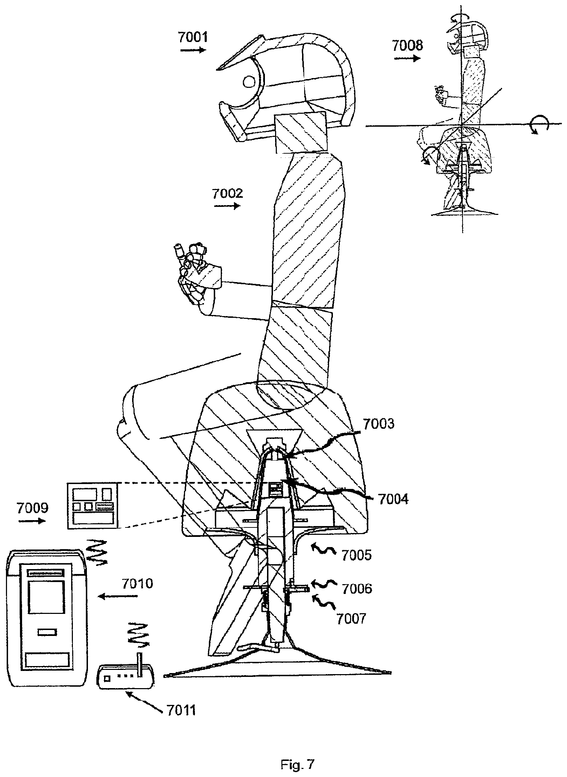

Referring now to Fig. 7, there is shown a side cutaway view of the user 7002 wearing a head mounted display 7001 sitting in a straddle position. The motion of the user 7002 is accomplished through rotation and core movements creating forward and backward and left and right motion creating pivoting motion about a spherical center located below the top of the inner cup and outer cup Fig. 6 6004 and sensed by the sensor unit Fig. 6 6003 with the advantage of small movements providing motion while not upsetting the user's balance and while providing rapid control of interactive movement.

The sensitivity of the invention to user 7002 core body movements has the advantage of controlling interactive game movement with realistic response times and without latency for forward and backward walking, sideways walking, virtual object and vehicle control and any additional interactive control where body movement can serve as a control mechanism along multiple axes 7008. Rotational movement is measured by the rotational sensor reading surface 7007 and an electronic sensor 7006. Returning the user 7002 who may be slightly disoriented wearing a head mounted display 7001 to a neutral and upright position for stable control of the motion interface provided by the invention and other input devices is accomplished with the aid of the centering disk 7005 which has the advantage of returning the user with minimal effort to a neutral position and guided motion along multiple axes 7008.

An electronic circuit board 7009 is mounted to, and shown within the inner cup 7004 with the advantage of creating wired or wireless interfaces between seat sensors and a computer 7009, mobile device, handheld gaming device or other computing device. In some embodiments the electronic circuit board 7009 transmits signals using wifi and TCP/IP enabling an internet connection to a wired or wireless access point 7011 with the advantage of enabling motion output from the seat to be transmitted over the internet to local or remote computers and interactive computer software. In some embodiments, motion control devices and head mounted displays may be routed through the seat to the electronic circuit board through data connections such as USB and video connections such as HDMI and relayed to local or remote computers and interactive computer software with the advantage of utilizing the interface in the chair as a hub for motion control devices and head mounted displays.

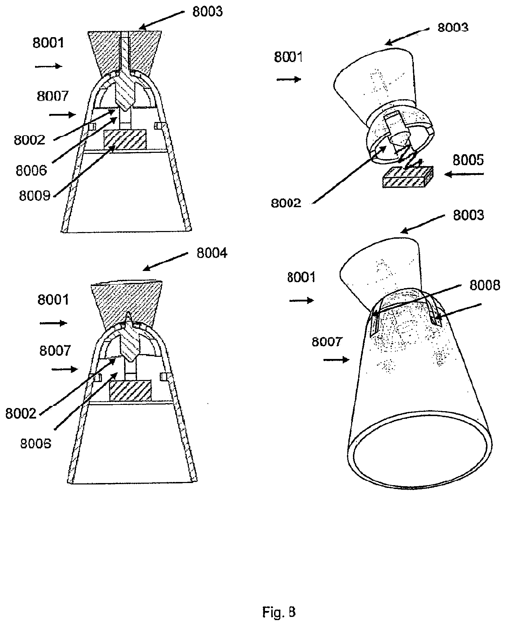

Referring now to Fig. 8, there is shown a side cutaway view and a perspective view of an embodiment of the disclosure where motion is translated from a cushion Fig. 6 6001 to pivoting cap 8003 connected to a positional guide 8002 with the advantage of allowing movement between neutral or level position 8003 and a deflected or pivoted position 8004. In at least one embodiment the pivoting cap 8003 is coupled to an outer cup Fig. 6 6003 to constrain movement of the cushion Fig. 6 6001 about the inner cup 8007. The pivoting cap 8001 is connected by a center pin and rotates according to guides 8008 of the inner cup 8007 to provide guided movement on multiple axes detected through the movement of the positional guide 8002. In at least one embodiment the positional guide 8002 is coupled to a wired or wireless joystick or positional input device. In at least one embodiment the positional guide 8002 contains a wired or wireless joystick or positional input device.

In at least one embodiment the positional guide connects to a joint which prevents rotational movement of the cushion Fig. 6 6001 relative to the rotational sensor Fig. 7 7006 such that seat rotation can be measured by the rotational sensor without multiple points of rotation. In at least one embodiment the inner cup 8007 has grooves 8008 guiding the pivoting cap 8001 with the advantage of secure but constrained translation of user Fig. 7 7002 motion to mechanical articulation of a positional guide 8002 whose movement can be detected. In one embodiment movement of the positional guide 8002 is detected by magnetic, optical or electrical effect by a wireless positional sensor 8005. In at least one embodiment the positional guide 8002 is coupled to an electrical mechanical positional sensor 8003 by a mechanical sensor couple 8006.

A mechanical sensor couple has the advantage of allowing free movement of the positional guide 8002 while remaining connected to the electrical mechanical sensor 8009 similar to the control of a finger on a joystick, where finger joints allow a finger to freely guide movement of a mechanical stem of a joystick while remaining in contact. In at least one embodiment the electrical mechanical sensor 8009 or wireless sensor 8005 are operatively coupled to an electronic circuit board Fig. 7 7009 with the advantage of providing motion input to a computing device. The electronic connection may be wired or wireless and include power and data connections.

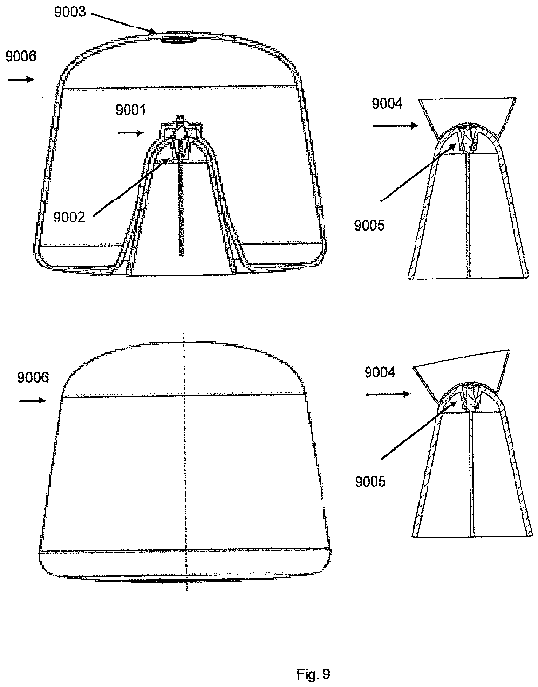

Referring now to Fig. 9, there is shown a side view and side cutaway detail views where motion translates to movement of a cushion 9006 by means of optical sensing. In at least one embodiment an optical far sensor 9002 which tracks movement of an optical marker 9003 positioned on the inside of the seat cushion 9006. The optical far sensor 9002 reading the optical marker positioned on the underside of the seat 9003 has the advantage of measuring body movement just underneath the seated user Fig. 7 7002 for detection of fine movements on multiple axes including up and down and left and right movement. In at least one embodiment the optical far sensor 9002 is reaches inside the cushion forming a cushion sensor couple 9001 which allows it to remain prone while the cushion moves.

In at least one embodiment the optical far sensor 9002 is integrated as a plug for an inflatable cushion. In at least one embodiment an optical near sensor 9005 reads movement of an articulating pivoting cap 9004. The optical near sensor 9002 reading the movement of an articulating cupped surface 9004 has the advantage of providing input similar to a track ball being able to translate motion of the full cushion 9006 from the user Fig. 7 7002 with precise sensor measurement and tight mechanical interface. The optical far sensor 9002 or optical near sensor 9005 is electronically connected to an electronic circuit board Fig. 7 7009 via a wired or wireless interface with the advantage of providing motion input to an interactive computing device.

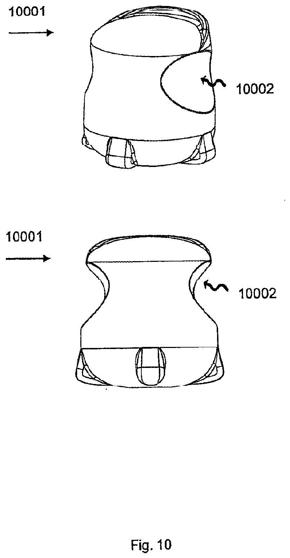

Referring now to Fig. 10 there is shown a perspective view and a side view where the cushion 10001 includes contoured surfaces 10002 with the advantage of providing additional support for the legs of a seated user enabling a straddle position and more precise control of lower body, leg and foot movement. In at least one embodiment the contoured surfaces are indentations on a seat cushion. In at least one embodiment the contoured surfaces involve an adjustable surface.

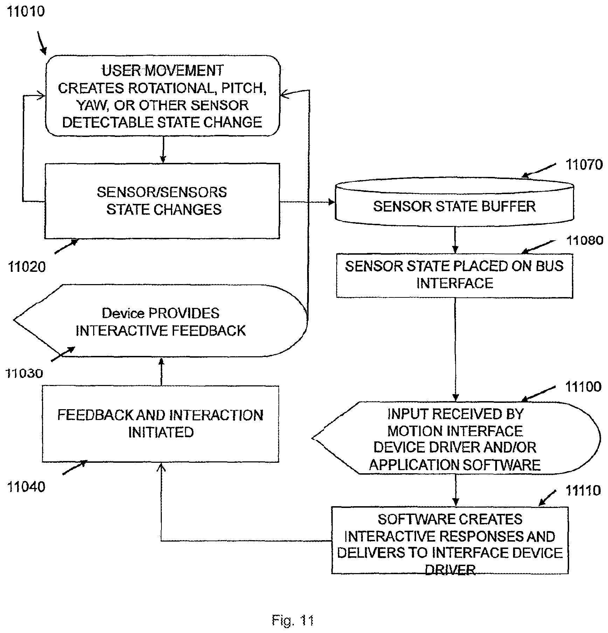

Referring now to Fig. 11 there is shown a flow chart of the translation of movement from the input device into electronic signals and instructions for computing devices. The translation of movement is accomplished by electronic polling of sensors for state and changes and relaying these signals via an electronic interface including the embodiment of the electronic circuit board Fig. 7 7009 and Fig. 3 3008 to computers, mobile devices such as smartphones and tablets, handheld gaming devices, head mounted computing devices, head mounted computing devices with head mounted displays, and other computing devices. Feedback and interaction may also be provided by software input from these devices to interactive sensors such as those in Fig. 2 2006 for feedback including but not limited to sound, vibration, light, light effects, steam or smoke, and other interactive effects. In some embodiments lighting of the cushion may indicate desired states of the user such as red for do-not-disturb or green for available.

User movement on the input device creates rotational, pitch, yaw or other sensor detectable state change 11010. Sensors of the input device undergo state change(s) 11020 as a result of user movement on the input device. The state change(s) are communicated to a sensor state buffer 11070. The sensor state is placed on a Bus interface 11080. The result is an input signal received by a motion interface device driver and/ or application software 11100. As a result of the input signal the software creates interactive response(s) and delivers it to an interface device driver 11110. As a result feedback and interaction elements may be initiated 11040 causing the device to provide interactive feedback, such as haptic feedback, or other user feedback known to those having skill in the art. Following the provision of interactive feedback, and contemporaneous to the provision of interactive feedback, the device continues to detect user movement and convert that movement into detectable state changes in the device's sensors.

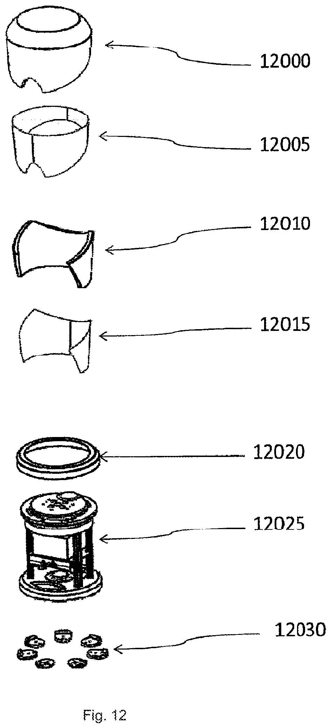

Figure 12 represents an exploded view of an embodiment of the input device is shown. The input device in this embodiment comprises an ergonomic seating surface 12000 which couples to an endo / exoskeletal seating 12005. A shroud surface 12010 and endo/exoskeletal shroud 12015 surrounds the endo / exoskeletal seating 12005. A system chassis 12025 serves as a central support structure to which the other components are attached. The system chassis sits on a plurality of feet 12030. The feet serve aesthetic functions as well as serving to adjust the height of the device. The feet may further comprise casters for rotation/translation. The feet may further comprise fixed tangential wheels for axial rotation. A foot ring / trim bezel / kick plate 12020 fits over the base of the system chassis.

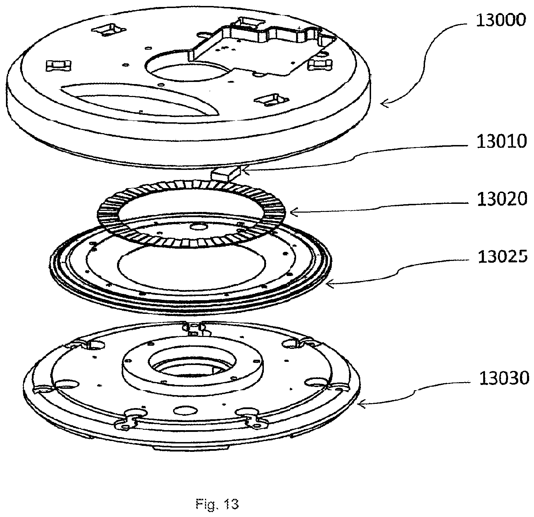

Figure 13 shows an embodiment of a rotation assembly of an embodiment of the device and comprises a rotating portion 13000 which in this embodiment holds the sensor and seating surface structure, a rotation sensor pickup 13010, a rotation indicator 13020, a turntable 13025 and a stationary base portion 13030.

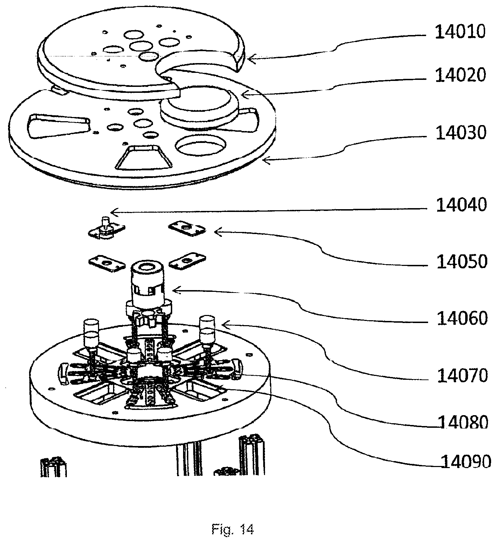

Figure 14 shows an exploded view of a directional seat portion of an embodiment of the input device. The seat portion further comprises a lower seat support 14030 onto which is mounted an upper seat shape cutout 14010, which provides space for the inclusion of a haptic feedback device 14020. A seat switch assembly 14040 which in this embodiment comprises 4 switches that are mapped to the "W", "A", "S", "D" keys of a keyboard is included. A joint 14060 sits between the chassis and the directional seat portion. Shafts 14070 are adjustable for elevation and location and serve as fulcrums for seat pivoting. Shaft holes 14080 for adjustable fulcrums position points for seat pivot and a switch carrier 14090 for adjustment range mounting surfaces are also provided.

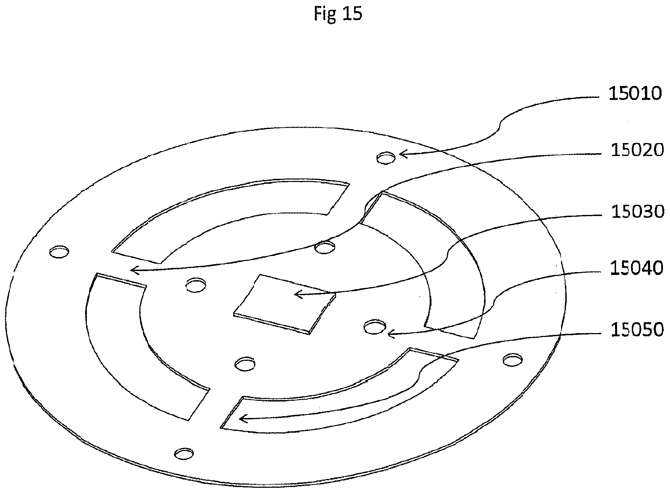

Figure 15 shows a gimbal that reduces a digital on/off switch scenario to a simple one board solution. The gimbal comprises outer mounts 15010, in this case, seat mounts, a gimbal X-axis spanner 15020, a gyro / accelerometer / anglo meter sensor 15030, inner mounts 15040, in this case chassis, and a gimbal Y- axis spanner 15020.

components of an example machine able to read instructions from, for example, a non-transitory machine-readable medium and execute them in one or more processors (or controllers). Specifically, a machine in the example form of a computer system 1300 within which instructions 1324 (e.g., software or program code) for causing the machine to perform any one or more of the methodologies discussed herein may be executed. In alternative embodiments, the machine operates as a standalone device or may be connected (e.g., networked) to other machines. In a networked deployment, the machine may operate in the capacity of a server machine or a client machine in a server-client network environment, or as a peer machine in a peer-to-peer (or distributed) network environment.

The machine for this configuration may be a mobile computing device such as a tablet computer, an ultrabook (or netbook) computer, a personal digital assistant (PDA), a cellular telephone, a smartphone, a web appliance, or like machine capable of executing instructions 1324 (sequential or otherwise) that specify actions to be taken by that machine. Further, while only a single machine is illustrated, the term "machine" shall also be taken to include any collection of machines that individually or jointly execute instructions 1324 to perform any one or more of the methodologies discussed herein.

The example computer system 1300 includes one or more processors 1302 (e.g., a central processing unit (CPU) and may also include a graphics processing unit (GPU), a digital signal processor (DSP), one or more application specific integrated circuits (ASICs), one or more radio-frequency integrated circuits (or chipset) (RFICs), a wireless fidelity (WiFi) chipset, a global positioning system (GPS) chipset, an accelerometer (one, two, or three-dimensional), or any combination of these). The computer system 1300 also includes a main memory 1304 and a static memory 1306. The components of the computing system are configured to communicate with each other via a bus 1308. The computer system 1300 may further include a graphics display unit 1310 (e.g., a plasma display panel (PDP), a liquid crystal display (LCD), glass display) which may be configured for capacitive or inductive touch sensitivity to allow for direct interaction with software user interfaces through the display 1310. The computer system 1300 may also include an alphanumeric input device 1312 (e.g., a keyboard), a cursor control device 1314 (e.g., a mouse, a trackball, a joystick, a motion sensor, or other pointing instrument), a storage unit 1316, a signal generation device 1318 (e.g., a speaker), and a network interface device 1320, which also are configured to communicate via the bus 1308.

The storage unit 1316 includes a machine-readable medium 1322 on which is stored instructions 1324 (e.g., software) embodying any one or more of the methodologies or functions described herein. The instructions 1324 (e.g., software) may also reside, completely or at least partially, within the main memory 1304 or within the processor 1302 (e.g., within a processor's cache memory) during execution thereof by the computer system 1300, the main memory 1304 and the processor 1302 also constituting machine-readable media. The instructions 1324 (e.g., software) may be transmitted or received over a network 1326 via the network interface device 1320.

While machine-readable medium 1322 is shown in an example embodiment to be a single medium, the term "machine-readable medium" should be taken to include a single medium or multiple media (e.g., a centralized or distributed database, or associated caches and servers) able to store instructions (e.g., instructions 1324). The term "machine-readable medium" shall also be taken to include any medium that is capable of storing instructions (e.g., instructions 1324) for execution by the machine and that cause the machine to perform any one or more of the methodologies disclosed herein. The term "machine-readable medium" includes, but may not be limited to, data repositories in the form of solid-state memories, optical media, and magnetic media.

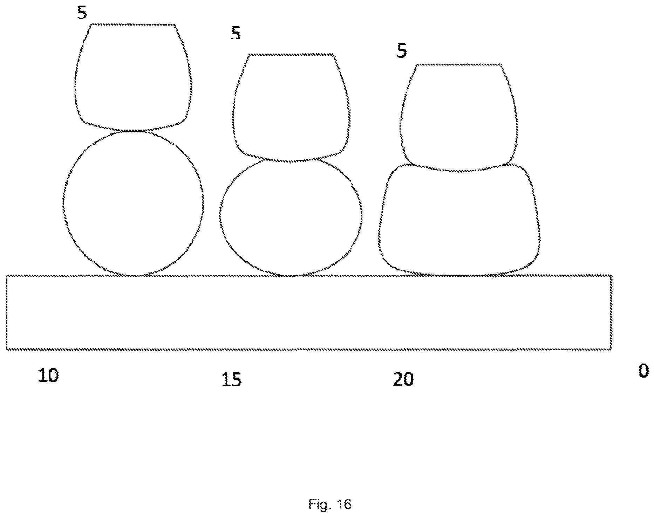

Figure 16 illustrates mechanisms for addressing and providing for variable movement speed controls. In embodiments a combination of analog tilt and switches create move modifier conditions, which could have the analogous function to pressing 'shift' or 'control' on a keyboard based on the angle of the seat. For example, the angle of the chair begins after a dead zone and then it tilts enough to create the slow to medium speed move, and then the switch creates the "shift" for "sprint" or a combination thereof where the switch could be made first for move, but still be in the analog dead zone, and then after the switch is made and more tilt is added to read outside of the dead zone, it could be interpreted as sprint. It may be desirable to use the tilt angle of the surface to imply relative velocity that would increase as angle increased, and then use the switch for a function such as jump.

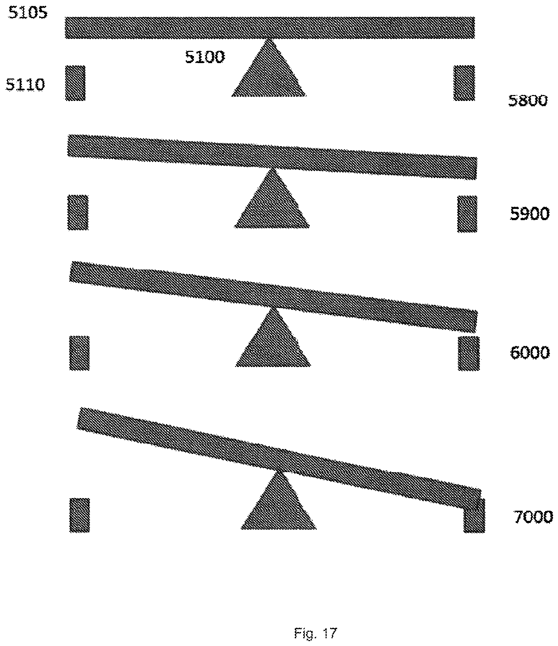

It may be desired for a user to tune their experience. This would require the ability to change fulcrum points, resistance, travel limits, and even sensitivity. Therefore, the following is provided: Shown in Figure 17A is the seating substrate to which is mounted the accelerometer and gyroscope. Figure 17B is the substrate removed to show the switches.

To allow the rotation of the support with respect to the switches and bumpers, the seat support is coupled to a skeleton support. The seat exoskeleton, seat support, and seat have a longitudinal axis L which is rotatable with respect to the floor about this axis L. As shown, a bearing is disposed between a lower surface of the skeleton and the floor which allows the relative rotation of the skeleton, the support and the seat with respect to the floor. The seat support and seat are pivotably coupled to a top surface of the seat skeleton in a manner which restricts the rotation of the seat and seat support with respect to the support skeleton. Disposed between the seat support / seat and the skeleton is a flexible coupling which can be a love-joy coupler, a universal joint, a cv joint, or a polymer or metal braid tube which allows for the rotation of the seat surface in a plurality of directions perpendicular to the longitudinal direction. Preferably, the coupling allows for the rotation in any direction perpendicular to the longitudinal direction.

The input device can have a floor engaging member having a floor engaging surface and a longitudinal axis generally perpendicular to the floor engaging surface. The skeleton support structure having a seat support surface generally parallel to the floor engaging surface. A rotatable bearing is disposed between the skeleton support structure configured to allow relative rotation of the skeleton support structure about the longitudinal axis with respect to the floor. A seat support is placed over the skeleton support structure. There is a coupling member disposed between the seat support and the seat support surface the coupling member pivotably coupling the seat support surface to the seat support member in a manner which restricts the rotation of seat support with respect to the support skeleton about the longitudinal axis and allows for the rotation of the seat support member in a plurality of directions perpendicular to the longitudinal direction. As described above, a plurality of sensors configured to detect the movement of the seat support with respect the seat support surface and provide a signal thereof.

The input device which is intended to measure the change in angle of the seat support with respect to the skeleton frame can have a first, a second, and third bumpers each radially disposed about the longitudinal axis. The plurality of sensors configured to detect the movement of the seat support are radially disposed about the longitudinal axis at a first radial distance from the longitudinal axis. The first and second bumpers are disposed at a second radial distance from the longitudinal axis, the second radial distance being less than the first radial distance. The third bumper is disposed at a third radial distance from the longitudinal axis, the third radial distance can be less than the first radial distance and different than the first radial distance.

The bumpers can be supported in members defining plurality of holes configured to allow the selective placement of the first and second bumpers to change the relative radial location from the longitudinal axis.. The first and second bumpers can have vertical adjustment in the form of a thread.. The input device can have at least one binary on/off switches which provides a digital output signal or at least one analog sensor which provides an analog output signal. In this regard, the analog sensor detects one of the change in resistance and a change in capacitance

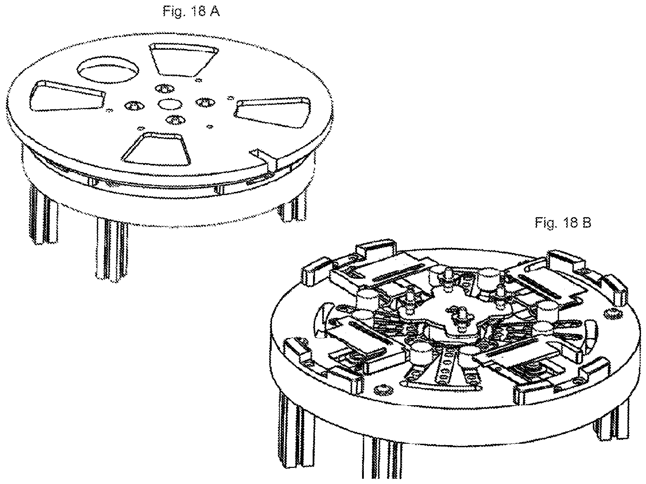

By positioning the bumpers in different pattern holes or relative position locations, as depicted in Figure 18 the user can increase or decrease effort required for actuating any of the switches. The binary on off switches which provide digital input can also be adjusted to be in different scenarios as well. It would be possible to put multiple switches in the same adjustment range. In this regard, application of forces by the user onto the seat causes rotation of the seat support member about a line of action defined by two adjacent bumpers. These bumpers can be two forward bumper B1 and B2, two sides bumpers B3 and B4, or B1 and B3 should the movement be along an angle of between zero and 90 degrees from a forward direction. The engagement location of the switches can be adjusted by varying the engagement height of the switches with respect to a bottom surface of the seat support member or seat.

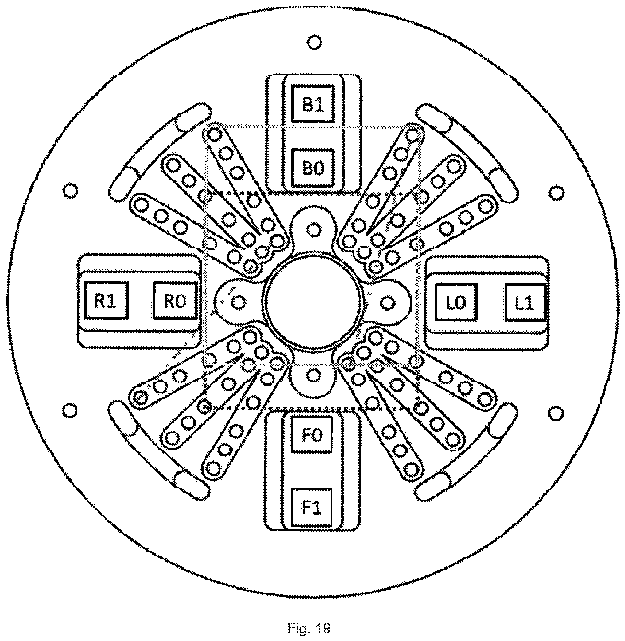

In some embodiments, as shown in Figure 19 the switch system mounts switches on a cantilever so that the switches can travel to extents and then the cantilever will flex before and after switch actuation to ensure that the switch engagement is consistent and the force from a rigidly mounted switch could be destructive. There is also a travel limitation block that can be exchanged or lowered. In some embodiments, above each switch range is a ramp that can be slid to a lower or higher profile to increase or decrease sensitivity of the switch.

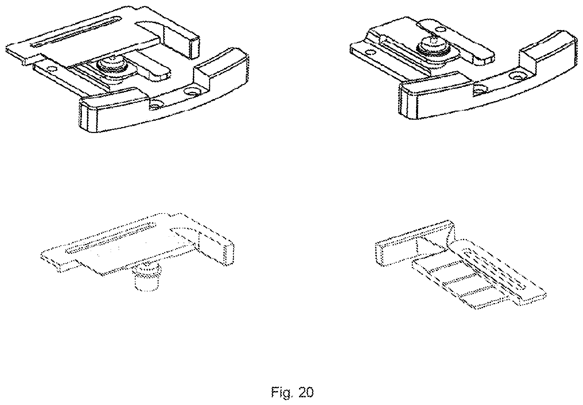

In some embodiments, as shown in Figure 20A A the use of a belt and I or gear combined with a motor provides feedback into the seat to provide guidance or resistance to user input. This allows for force feedback (like popular racing simulator steering wheels) which in VR, could be implemented as director's nudges/encouragement to ensure that the participant is not missing key cinematic or other important events. The use of an encoder to track angular position is provided. The encoder can be part of the motor, in some embodiments, and is driven through gears or belt mechanisms. In other embodiments, as shown in Figure 20B it can be a simple as sticker that is applied and read by an optical encoder. Shown here is a sticker that is applied to the turntable.

The drive can be placed so as to cause rotation of the skeleton support structure, seat support, and seat with respect to the floor about the longitudinal axis L. Optionally, linear actuators can be positioned adjacent to the bumpers to cause slight rotation of the seat support with respect to the skeletal frame.

Using an encoder and a motor as shown in Figure 20C allows for intelligent force feedback, user orientation prompting and/or enforcement. In some embodiments the motor is direct drive while in other embodiments a transmission is employed. Shown here (fig 7C) is a wheel that could be toothed or belted in engagement to the turntable to provide the rotary force necessary. In some embodiments, as shown in Figure 10, the pivot point is positioned high on the seat to facilitate ease of use, comfort and control.

Switch cartridge, located between two surfaces that approach each other as the top surface "2" is deformed by input from occupant; 2. Seating surface concave or convex; 3. Adjustable collar for modifying flexure characteristics; 4. Form that meshes well with the body (thighs, calves, heels, ankles; 5. Turn table; 6. Location of rotary encoder; 7. Wall could be self-supporting polymer or collapsible "pressurized" exercise- ballish; 8. Can be a belt or tube that could contain matter to pressurize to decrease flexibility; and 9. Location of sensing device for pressure as well as magnetometer, accelerometer, compass, gyro, etc "MPU

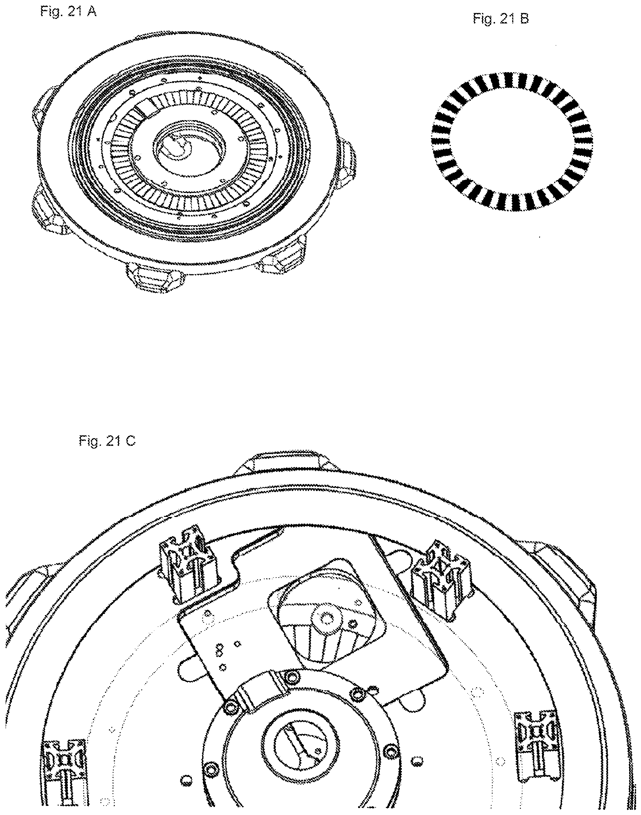

In an embodiment, a omni directional treadmill with a foldable support scaffold is provided as shown in Figure 21A. The scaffold includes ring height adjustments with no linear slides. The construction of the scaffold uses a common part in many places for economical tooling and construction, creating a strong, light, efficient, robust, and collapsible mechanism. A mechanism capable of being powered up or down at one or more points of contact to reduce weight felt by occupant (unweighing mechanism) or increase weight felt by occupant or to penalize for "weightlessness" in simulation. Height of device can easily be calculated when read by rotary encoders on pivots and could be balanced easily by a linear spring or a rotary spring at any one joint. A number of units could easily stack or be put on edge and stored. In some embodiments the scaffold is constructed from extra durable materials so that it is sturdy enough for containerization for platoon to brigade level training exercises. Lengths of the linkages could be adjusted to limit travel. It is preferred that the link ratios be maintained so that the top plane of the mechanism is parallel to the bottom plane of the mechanism.

This device, as further illustrated in Figure 21B utilizes, in some embodiments, simple pivots in place of complex, sloppy, and expensive linear rails. Each pivot or any pivot could contain balance springs to reduce the weight felt by an occupant, or increase the weight felt by an occupant. The device could be driven up or down by a single point as well to provide desired simulation results. The axes indicated by the arrows shown in Figure 21B are locations for torsion or rotary springs for reducing or increasing the weight felt by an occupant. Rotary dampers could be applied to slow movement in some embodiments. A single rotary encoder could be applied to know the exact location of the top plane of the device to help software understand the stature of the occupant as well as information as to if the occupant is prone, crouching, jumping, or standing.

Unmanned vehicles such as underwater, areal, and terrestrial vehicles today are controllable using imaging systems. Drones for example are predominately four rotary wings (propellers) situated in a rectangle or square which can vary their power to maintain orientation, or move in any given direction or speed. Using an HMD to control the "eyes" of the device, the angle of the torso/chair to define forward, and each switch to provide the planar movement of the aircraft, and then in some embodiments, a hand or foot manipulated input device, as previously described herein to control additional controls integrated in the drone. Control schemes in some embodiments may include controlling the elevation of the drone based on pressure of a controlled volume or elevation change of the chair itself by the user supporting their weight more or less to upset or overcome the balance of a neutral weight balance system. Moving control to other parts of the body, rather than the hands, can allow for additional axis of control to be manipulated by the very accurate and tactile fingers, for example, systems such as fire control or robotic hands or manipulators. Control for using hybrid rotary wing/lift surface drone control (osprey-class device) is also contemplated.

Control seats as described herein are also useful in an augmented reality environment. By providing a target surface for the occupant and display, and combining the rotary encoder, the occupant can be presented with an augmented world that is updating properly in accordance with the user's position. In such embodiments a rotary encoder detects the radial position / orientation of the user and communicates that information to the computing device rendering the augmented reality such that the computing device can adjust the position of the augmented reality content so that it matches the user's position in the real world.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Various implementations of the systems and methods described here can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications, scripts, or program code) include machine instructions, , for a programmable processor, , and can be implemented in a high-level procedural and/or object-oriented programming language, and/or in assembly/machine language. The computer programs can be structured functionality in units referenced as "modules". As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter affecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

One or more aspects of the disclosure can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specifics, these should not be construed as limitations on the scope of the disclosure or of what may be claimed, but rather as descriptions of features specific to particular implementations of the disclosure. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A number of implementations have been described. Nevertheless, it will be understood that various modifications may be made without departing from the spirit and scope of the disclosure. Accordingly, other implementations are within the scope of the following claims. For example, the actions recited in the claims can be performed in a different order and still achieve desirable results.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Upon reading this disclosure, those of skill in the art will appreciate still additional alternative structural and functional designs for a system and a process for deep search in computing environments through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. An input device comprising:
a floor engaging member having a floor engaging surface and a longitudinal axis generally perpendicular to the floor engaging surface;
a skeleton support structure having a seat support surface generally parallel to the floor engaging surface;
a bearing disposed between the skeleton support structure configured to allow only relative rotation of the skeleton support structure about the longitudinal axis with respect to the floor;
a seat support;
first, second, and third shafts each disposed about the longitudinal axis between the seat support and the seat support surface, the first, second, and third shafts defining first and second seat axis displaced from the longitudinal axis and parallel to the floor engaging surface;
a coupling member disposed between the seat support and the seat support surface the coupling member pivotably coupling the seat support surface to the seat support member in a manner which restricts the rotation of seat support with respect to the support skeleton about the longitudinal axis and allows for the rotation of the seat support member in a plurality of directions perpendicular to the longitudinal direction;
a first plurality of sensors configured to detect the movement of the seat support with respect the seat support surface about the first and second seat axis and provide a first signal thereof;
a motion tracking head mounted display configured to receive a video signal input and having a second plurality of sensors configured to detect the movement of the head mounted display with respect the ground, said second plurality of sensors configured to provide a second signal indicative of the movement of the head mounted display with respect the ground; and
a controller configured to receive the first and second signals and selectively adjust the first video signal to display a translational movement of an image at a first time in response to the first signal and selectively adjust the first video signal to display a rotational movement of an image at a second time in response to the second signal.

2. The input device according to Claim 1, wherein the plurality of sensors configured to detect the movement of the seat support are disposed about the longitudinal axis at a first distance from the longitudinal axis.

3. The input device according to Claims 1 - 2, wherein the first and second shafts are disposed at a second distance from the longitudinal axis, the second distance being less than the first distance.

4. The input device according to Claims 1-3, wherein the third shaft is disposed at a third distance from the longitudinal axis, the third distance being less than the first distance and different than the first distance.

5. The input device according to Claims 1- 4, further comprising a plurality of holes configured to allow the selective placement of the first and second shafts.

6. The input device according to Claims 1-5, wherein the first and second shafts comprise vertical adjustment.

7. The input device according to Claims 1-6 wherein the input device comprises at least one binary on/off switch which provides a digital output signal.

8. The input device according to Claims 1-7 wherein the input device comprises at least one analog sensor which provides an analog output signal.

9. The input device according to Claim 8 wherein the analog sensor detects one of the change in resistance and a change in capacitance.

10. A virtual reality system comprising:
a floor engaging member having a floor engaging surface and a longitudinal axis generally perpendicular to the floor engaging surface;
a skeleton support structure having a seat support surface generally parallel to the floor engaging surface and a seat support structure axis;
a bearing disposed between the skeleton support structure configured to allow relative rotation of the skeleton support structure about the longitudinal axis with respect to the floor;
a seat support;
first, second, and third shafts each disposed about the longitudinal axis between the seat support and the seat support surface, the first, second, and third shafts defining first and second seat axis displaced from the longitudinal axis and parallel to the floor engaging surface;
a coupling member disposed between the seat support and the seat support surface the coupling member pivotably coupling the seat support surface to the seat support member in a manner which restricts the rotation of seat support with respect to the support skeleton about the longitudinal axis and allows for the rotation of the seat support member in a plurality of directions perpendicular to the longitudinal direction; and
a first plurality of sensors configured to detect only the rotational movement of the skeleton support structure with respect the floor engaging surface about the seat support structure axis and provide a first signal thereof, and a second plurality of sensors configured to detect only the rotational movement of the seat support with respect the seat support surface along an axis parallel to the floor and provide a second signal thereof;
a motion tracking head mounted display configured to receive a video signal input and having a second plurality of sensors configured to detect the movement of the head mounted display with respect the ground, said second plurality of sensors configured to provide a second signal indicative of the movement of the head mounted display with respect the ground; and
a controller configured to receive the first and second signals and selectively adjust the first video signal to display a translational movement of an image at a first time in response to the first signal and selectively adjust the first video signal to display a rotational movement of an image at a second time in response to the second signal.

11. The virtual reality system according to Claim 10, further comprising a first and a second pairs of shafts each disposed about the longitudinal axis, and wherein the second plurality of sensors which are configured to detect the movement of the seat support are disposed about the longitudinal axis at a first distance from the longitudinal axis.

12. The virtual reality system according to Claims 11 and 12, wherein the first pair of shafts are disposed at a second distance from the longitudinal axis, the second distance being less than the first distance.

13. The virtual reality system according to Claim 10-12, further comprising a head mounted display, the head mounted display having a third plurality of sensors configured to measurement the relative movement of the display and producing a third signal indicative of rotation of the head mounted display, and wherein the display is configured to produce a series of pictures in response to changes in signals produced by the first, the second, and third signals.

14. The virtual reality system according to Claims 10--13, wherein the first and second pairs of shafts comprise vertical adjustment.

## Patentansprüche

1. Eine Eingabevorrichtung, aufweisend:
ein Bodenangriffselement mit einer Bodenangriffsfläche und einer Längsachse, die im Allgemeinen senkrecht zu der Bodenangriffsfläche verläuft;
eine Skelettstützstruktur mit einer Sitzstützfläche, die im Allgemeinen parallel zu der Bodenangriffsfläche verläuft;
ein zwischen der Skelettstützstruktur angeordnetes Lager, das so konfiguriert ist, dass es nur eine relative Drehung der Skelettstützstruktur um die Längsachse in Bezug auf den Boden zulässt;
eine Sitzstütze;
eine erste, zweite und dritte Welle, die jeweils um die Längsachse zwischen der Sitzstütze und der Sitzstützfläche angeordnet sind, wobei die erste, zweite und dritte Welle eine erste und zweite Sitzachse definieren, die gegenüber der Längsachse versetzt und parallel zu der Bodenstützfläche sind;
ein Kopplungselement, das zwischen der Sitzstütze und der Sitzstützfläche angeordnet ist, wobei das Kopplungselement die Sitzstützfläche schwenkbar mit dem Sitzstützelement in einer Weise koppelt, die die Drehung der Sitzstütze in Bezug auf das Stützskelett um die Längsachse einschränkt und die Drehung des Sitzstützelements in einer Vielzahl von Richtungen senkrecht zur Längsrichtung ermöglicht;
eine erste Mehrzahl von Sensoren, die so konfiguriert sind, dass sie die Bewegung der Sitzstütze in Bezug auf die Sitzstützfläche um die erste und zweite Sitzachse erfassen und ein erstes Signal davon liefern;
eine bewegungsverfolgende kopfmontierte Anzeige, die so konfiguriert ist, dass sie einen Videosignaleingang empfängt und eine zweite Vielzahl von Sensoren aufweist, die so konfiguriert sind, dass sie die Bewegung der kopfmontierten Anzeige in Bezug auf den Boden erfassen, wobei die zweite Vielzahl von Sensoren so konfiguriert ist, dass sie ein zweites Signal liefert, das die Bewegung der kopfmontierten Anzeige in Bezug auf den Boden anzeigt; und
einen Controller, der so konfiguriert ist, dass er das erste und das zweite Signal empfängt und das erste Videosignal selektiv einstellt, um eine Translationsbewegung eines Bildes zu einem ersten Zeitpunkt als Reaktion auf das erste Signal anzuzeigen, und das erste Videosignal selektiv einstellt, um eine Rotationsbewegung eines Bildes zu einem zweiten Zeitpunkt als Reaktion auf das zweite Signal anzuzeigen.

2. Eingabevorrichtung nach Anspruch 1, wobei die Mehrzahl von Sensoren, die so konfiguriert sind, dass sie die Bewegung der Sitzstütze erfassen, um die Längsachse in einem ersten Abstand von der Längsachse angeordnet sind.

3. Eingabevorrichtung nach den Ansprüchen 1 - 2, wobei die erste und die zweite Welle in einem zweiten Abstand von der Längsachse angeordnet sind, wobei der zweite Abstand kleiner als der erste Abstand ist.

4. Eingabevorrichtung nach den Ansprüchen 1-3, wobei die dritte Welle in einem dritten Abstand von der Längsachse angeordnet ist, wobei der dritte Abstand kleiner als der erste Abstand ist und sich von dem ersten Abstand unterscheidet.

5. Eingabevorrichtung nach den Ansprüchen 1 - 4, die ferner eine Vielzahl von Löchern umfasst, die so konfiguriert sind, dass sie die selektive Platzierung der ersten und zweiten Welle ermöglichen.

6. Eingabevorrichtung nach den Ansprüchen 1 - 5, wobei die erste und zweite Welle eine vertikale Verstellung aufweisen.

7. Eingabevorrichtung nach den Ansprüchen 1 - 6, wobei die Eingabevorrichtung mindestens einen binären Ein/Aus-Schalter umfasst, der ein digitales Ausgangssignal liefert.

8. Eingangsvorrichtung nach den Ansprüchen 1 - 7, wobei die Eingabevorrichtung mindestens einen analogen Sensor umfasst, der ein analoges Ausgangssignal liefert.

9. Eingabevorrichtung nach Anspruch 8, bei der der analoge Sensor entweder die Widerstandsänderung oder die Kapazitätsänderung erfasst.

10. Ein Virtual-Reality-System, aufweisend:
ein Bodenangriffselement mit einer Bodenangriffsfläche und einer Längsachse, die im Allgemeinen senkrecht zu der Bodenangriffsfläche verläuft;
eine Skelettstützstruktur mit einer Sitzstützfläche, die im Allgemeinen parallel zu der Bodenangriffsfläche verläuft, und einer Sitzstützstrukturachse;
ein zwischen der Skelettstützstruktur angeordnetes Lager, das so konfiguriert ist, dass es eine relative Drehung der Skelettstützstruktur um die Längsachse in Bezug auf den Boden ermöglicht;
eine Sitzstütze;
eine erste, zweite und dritte Welle, die jeweils um die Längsachse zwischen der Sitzstütze und der Sitzstützfläche angeordnet sind, wobei die erste, zweite und dritte Welle eine erste und zweite Sitzachse definieren, die gegenüber der Längsachse versetzt und parallel zu der Bodenstützfläche sind;
ein Kopplungselement, das zwischen der Sitzstütze und der Sitzstützfläche angeordnet ist, wobei das Kopplungselement die Sitzstützfläche schwenkbar mit dem Sitzstützelement in einer Weise koppelt, die die Drehung der Sitzstütze in Bezug auf das Stützskelett um die Längsachse einschränkt und die Drehung des Sitzstützelements in einer Vielzahl von Richtungen senkrecht zur Längsrichtung ermöglicht; und
eine erste Mehrzahl von Sensoren, die so konfiguriert sind, dass sie nur die Drehbewegung der Skelettstützstruktur in Bezug auf die Bodenangriffsfläche um die Achse der Sitzstützstruktur erfassen und ein erstes Signal davon liefern, und eine zweite Mehrzahl von Sensoren, die so konfiguriert sind, dass sie nur die Drehbewegung der Sitzstütze in Bezug auf die Sitzstützfläche entlang einer Achse parallel zum Boden erfassen und ein zweites Signal davon liefern;
eine bewegungsverfolgende kopfmontierte Anzeige, die so konfiguriert ist, dass sie einen Videosignaleingang empfängt und eine zweite Vielzahl von Sensoren aufweist, die so konfiguriert sind, dass sie die Bewegung der kopfmontierten Anzeige in Bezug auf den Boden erfassen, wobei die zweite Vielzahl von Sensoren so konfiguriert ist, dass sie ein zweites Signal liefert, das die Bewegung der kopfmontierten Anzeige in Bezug auf den Boden anzeigt; und
einen Controller, der so konfiguriert ist, dass er das erste und das zweite Signal empfängt und das erste Videosignal selektiv einstellt, um eine Translationsbewegung eines Bildes zu einem ersten Zeitpunkt als Reaktion auf das erste Signal anzuzeigen, und das erste Videosignal selektiv einstellt, um eine Rotationsbewegung eines Bildes zu einem zweiten Zeitpunkt als Reaktion auf das zweite Signal anzuzeigen.

11. Virtual-Reality-System nach Anspruch 10, ferner mit einem ersten und einem zweiten Paar von Wellen, die jeweils um die Längsachse angeordnet sind, und wobei die zweite Vielzahl von Sensoren, die so konfiguriert sind, dass sie die Bewegung der Sitzstütze erfassen, um die Längsachse in einem ersten Abstand von der Längsachse angeordnet sind.

12. Virtual-Reality-System nach den Ansprüchen 11 und 12, bei dem das erste Wellenpaar in einem zweiten Abstand von der Längsachse angeordnet ist, wobei der zweite Abstand kleiner als der erste Abstand ist.

13. Virtual-Reality-System nach Anspruch 10 - 12, das ferner eine kopfmontierte Anzeige umfasst, wobei die kopfmontierte Anzeige eine dritte Vielzahl von Sensoren aufweist, die so konfiguriert sind, dass sie die relative Bewegung der Anzeige messen und ein drittes Signal erzeugen, das die Drehung der kopfmontierten Anzeige anzeigt, und wobei die Anzeige so konfiguriert ist, dass sie eine Reihe von Bildern als Reaktion auf Änderungen der Signale erzeugt, die durch das erste, das zweite und das dritte Signal erzeugt werden.

14. Virtual-Reality-System nach den Ansprüchen 10 - 13, wobei das erste und zweite Wellenpaar eine Vertikalverstellung aufweist.

## Revendications

1. Un dispositif d'entrée comprenant:
un élément d'engagement au sol ayant une surface d'engagement au sol et un axe longitudinal généralement perpendiculaire à la surface d'engagement au sol;
une structure de support du squelette ayant une surface de support du siège généralement parallèle à la surface d'engagement du sol ;
un palier disposé entre la structure de support du squelette configuré pour permettre uniquement une rotation relative de la structure de support du squelette autour de l'axe longitudinal par rapport au sol ;
un support de siège ;
des premier, deuxième et troisième arbres disposés chacun autour de l'axe longitudinal entre le support du siège et la surface de support du siège, les premier,
deuxième et troisième arbres définissant les premier et deuxième axes du siège décalés par rapport à l'axe longitudinal et parallèles à la surface d'engagement au sol;
un élément d'accouplement disposé entre le support du siège et la surface de support du siège l'élément d'accouplement accouple de manière pivotante la surface de support du siège à l'élément de support du siège d'une manière qui limite la rotation du support du siège par rapport au squelette du support autour de l'axe longitudinal et permet la rotation de l'élément de support du siège dans plusieurs directions perpendiculaires à la direction longitudinale ;
une première pluralité de capteurs configurés pour détecter le mouvement du support du siège par rapport à la surface du support du siège autour du premier et du deuxième axe du siège et fournir un premier signal de ce mouvement ;
un dispositif d'affichage monté sur la tête et permettant de suivre les mouvements, configuré pour recevoir un signal vidéo en entrée et comportant une seconde pluralité de capteurs configurés pour détecter le mouvement du dispositif d'affichage monté sur la tête par rapport au sol, ladite seconde pluralité de capteurs étant configurée pour fournir un second signal indiquant le mouvement du dispositif d'affichage monté sur la tête par rapport au sol ; et
un contrôleur configuré pour recevoir les premier et second signaux et pour ajuster sélectivement le premier signal vidéo afin d'afficher un mouvement de translation d'une image à un premier moment en réponse au premier signal et pour ajuster sélectivement le premier signal vidéo afin d'afficher un mouvement de rotation d'une image à un second moment en réponse au second signal.

2. Dispositif d'entrée selon la revendication 1, dans lequel la pluralité de capteurs configurés pour détecter le mouvement du support du siège sont disposés autour de l'axe longitudinal à une première distance de l'axe longitudinal.

3. Dispositif d'entrée selon les revendications 1 - 2, dans lequel les premier et deuxième arbres sont disposés à une deuxième distance de l'axe longitudinal, la deuxième distance étant inférieure à la première.

4. Dispositif d'entrée selon les revendications 1 - 3, dans lequel le troisième arbre est disposé à une troisième distance de l'axe longitudinal, la troisième distance étant inférieure à la première distance et différente de la première distance.

5. Dispositif d'entrée selon les revendications 1 - 4, comprenant en outre une pluralité de trous configurés pour permettre le placement sélectif des premier et deuxième arbres.

6. Dispositif d'entrée selon les revendications 1 - 5, dans lequel les premier et deuxième arbres comportent un réglage vertical.

7. Dispositif d'entrée selon les revendications 1 - 6, dans lequel le dispositif d'entrée comprend au moins un interrupteur binaire marche/arrêt qui fournit un signal de sortie numérique.

8. Dispositif d'entrée selon les revendications 1 - 7, dans lequel le dispositif d'entrée comprend au moins un capteur analogique qui fournit un signal de sortie analogique.

9. Dispositif d'entrée selon la revendication 8, dans lequel le capteur analogique détecte une des variations de résistance et une variation de capacité.

10. Un système de réalité virtuelle comprenant :
un élément d'engagement au sol ayant une surface d'engagement au sol et un axe longitudinal généralement perpendiculaire à la surface d'engagement au sol ;
une structure de support du squelette ayant une surface de support du siège généralement parallèle à la surface d'engagement au sol et un axe de structure de support du siège ;
un palier disposé entre la structure de support du squelette configuré pour permettre une rotation relative de la structure de support du squelette autour de l'axe longitudinal par rapport au sol ;
un support de siège ;
des premier, deuxième et troisième arbres disposés chacun autour de l'axe longitudinal entre le support du siège et la surface de support du siège, les premier, deuxième et troisième arbres définissant les premier et deuxième axes du siège décalés par rapport à l'axe longitudinal et parallèles à la surface d'engagement au sol ;
un élément d'accouplement disposé entre le support du siège et la surface de support du siège l'élément d'accouplement accouple de manière pivotante la surface de support du siège à l'élément de support du siège d'une manière qui limite la rotation du support du siège par rapport au squelette du support autour de l'axe longitudinal et permet la rotation de l'élément de support du siège dans plusieurs directions perpendiculaires à la direction longitudinale ; et
une première pluralité de capteurs configurés pour détecter uniquement le mouvement de rotation de la structure de support du squelette par rapport à la surface d'engagement du plancher autour de l'axe de la structure de support du siège et fournir un premier signal de celui-ci, et une seconde pluralité de capteurs configurés pour détecter uniquement le mouvement de rotation du support du siège par rapport à la surface de support du siège le long d'un axe parallèle au plancher et fournir un second signal de celui-ci ;
un dispositif d'affichage monté sur la tête et permettant de suivre les mouvements, configuré pour recevoir un signal vidéo en entrée et comportant une seconde pluralité de capteurs configurés pour détecter le mouvement du dispositif d'affichage monté sur la tête par rapport au sol, ladite seconde pluralité de capteurs étant configurée pour fournir un second signal indiquant le mouvement du dispositif d'affichage monté sur la tête par rapport au sol ; et
un contrôleur configuré pour recevoir les premier et second signaux et pour ajuster sélectivement le premier signal vidéo afin d'afficher un mouvement de translation d'une image à un premier moment en réponse au premier signal et pour ajuster sélectivement le premier signal vidéo afin d'afficher un mouvement de rotation d'une image à un second moment en réponse au second signal.

11. Système de réalité virtuelle selon la revendication 10, comprenant en outre une première et une deuxième paire d'arbres, chacun disposé autour de l'axe longitudinal, et dans lequel la deuxième pluralité de capteurs qui sont configurés pour détecter le mouvement du support de siège sont disposés autour de l'axe longitudinal à une première distance de l'axe longitudinal.

12. Système de réalité virtuelle selon les revendications 11 et 12, dans lequel la première paire d'arbres est disposée à une seconde distance de l'axe longitudinal, la seconde distance étant inférieure à la première.

13. Système de réalité virtuelle selon la revendication 10 - 12, comprenant en outre un affichage monté sur la tête, l'affichage monté sur la tête ayant une troisième pluralité de capteurs configurés pour mesurer le mouvement relatif de l'affichage et produire un troisième signal indiquant la rotation de l'affichage monté sur la tête, et dans lequel l'affichage est configuré pour produire une série d'images en réponse aux changements des signaux produits par les premier, deuxième et troisième signaux.

14. Système de réalité virtuelle selon les revendications 10 - 13, dans lequel la première et la deuxième paire d'arbres comportent un ajustement vertical.
